# EUROPÄISCHE PATENTSCHRIFT

(11) **EP 3 380 389 B1**
(45) Veröffentlichungstag und Bekanntmachung des Hinweises auf die Patenterteilung: **01.01.2020**
(21) Anmeldenummer: 16797569.7
(22) Anmeldetag: 17.11.2016
(51) Int. Cl.: B62D 5/00

(54) **FEEDBACK-AKTUATOR FÜR EINE LENKEINRICHTUNG**
FEEDBACK ACTUATOR FOR A STEERING MECHANISM
ACTIONNEUR À RÉTROACTION POUR UN SYSTÈME DE DIRECTION

(30) Priorität: 25.11.2015 DE 102015015148
(43) Veröffentlichungstag der Anmeldung: 03.10.2018
(73) Patentinhaber: ThyssenKrupp Presta AG, 9492 Eschen (LI); thyssenkrupp AG, 45143 Essen (DE)
(72) Erfinder: POLMANS, Kristof, 6464 Tarrenz (AT); KETTENBERGER, Thomas, 83308 Trostberg (DE)
(74) Vertreter: thyssenkrupp Intellectual Property GmbH
(86) Internationale Anmeldenummer: PCT/EP2016/077975
(87) Internationale Veröffentlichungsnummer: WO 2017/089217

(56) Entgegenhaltungen:
- WO-A1-2016/071270
- DE-A1- 10 159 330
- DE-A1- 10 248 343
- DE-A1- 19 908 832

## Beschreibung

Die vorliegende Erfindung betrifft einen Feedback-Aktuator für ein Lenksystem mit den Merkmalen des Oberbegriffs des Anspruchs 1 .

Bei Steer-by-Wire-Lenksystem ist die Stellung der gelenkten Räder nicht direkt mit dem Lenkrad gekoppelt. Es besteht eine Verbindung zwischen dem Lenkrad und den gelenkten Rädern über elektrische Signale. Der Fahrerlenkwunsch wird von einem Lenkwinkelsensor abgegriffen und in Abhängigkeit des Fahrerlenkwunsches wird über einen Lenksteller die Stellung der gelenkten Räder geregelt. Eine mechanische Verbindung zu den Rädern ist nicht vorgesehen, sodass nach Betätigung des Lenkrads eine Kraft-Rückmeldung fehlt, z. B. eine entsprechende Rückmeldung beim Parken, wo aus Komfortgründen ein geringer Kraftaufwand gewünscht ist, oder bei einer üblichen Fahrt, bei der ein der Fahrzeugreaktion entsprechendes höheres Lenkmoment gewünscht ist. Um bei Steer-by-Wire-Lenkungen die Rückmeldungen der Straße auf das Lenkrad zu simulieren, ist es notwendig, am Lenkrad bzw. der Lenksäule einen Feedback-Aktuator vorzusehen, welcher in Abhängigkeit der Rückwirkungen der Lenkhandhabe ein Lenkgefühl aufprägt. Dieser Feedback-Aktuator besteht in der Regel aus einem Elektromotor, der über ein Untersetzungsgetriebe auf die Lenksäule wirkt. Nachteilig an diesen Lenkradaktuatoren ist, dass ihre Herstellung mit hohen Kosten verbunden ist und der Platzbedarf im Bereich der Lenksäule erheblich ist.

Die DE 195 39 101 C1 offenbart eine Rückwirkungssimulation, bei der ein Rückstellmoment auf das Lenkrad bzw. die Lenkwelle ausgeübt wird. Dabei ist eine Rückstellfederanordnung vorgesehen, die ein Rückstellmoment auf das Lenkrad ausübt. Der gewünschte Verlauf des Rückstellmomentes in Abhängigkeit vom Lenkwinkel wird durch einen Elektromotor erzeugt. Ein Nachteil dieser Lösung ist, dass der Motor aufgrund der geforderten hohen Rückstellmomente entsprechend groß dimensioniert werden muss.

Aus der DE 199 08 832 A1 ist ein Feedback-Aktuator der eingangs genannten Art bekannt. Dieser weist ein Zugmittelgetriebe mit einer an der Lenkwelle angreifenden Federanordnung und einen Elektromotor auf. Die Ansteuerung des Elektromotors zur Erzeugung eines bestimmten Rückstellmoments ist jedoch aufwendig. Dies gilt ebenfalls für die aus der DE 102 48 343 A1 und der DE 101 59 330 A1 bekannten Feedback-Aktuatoren.

Der Erfindung liegt die Aufgabe zugrunde, einen verbesserten Feedback-Aktuator für eine Lenkeinrichtung für Kraftfahrzeuge bereitzustellen,.

Diese Aufgabe wird von einem Feedback-Aktuator mit den Merkmalen des Anspruchs 1 gelöst. Vorteilhafte Weiterbildungen der Erfindung können den Unteransprüchen entnommen werden. Weiterhin kann ein Steer-by-Wire Lenksystem mit den Merkmalen des Anspruchs 12 entnommen werden.

Danach ist ein Feedback-Aktuator für eine Lenkeinrichtung für mit einem auf die gelenkten Räder wirkenden, in Abhängigkeit des Fahrerlenkwunsches elektronisch geregelten Lenksteller versehene Kraftfahrzeuge vorgesehen, wobei der Feedback-Aktuator über eine Lenkwelle die Rückwirkungen der Straße auf ein Lenkrad überträgt, wobei der Feedback-Aktuator ein vorgespanntes Zugmittelgetriebe und einen Elektromotor aufweist, wobei das Zugmittelgetriebe einen federbeaufschlagten Seilzug aufweist.

Durch das Vorhandensein des vorgespannten Zugmittelgetriebes, das einen federbeaufschlagten Seilzug aufweist, kann der Elektromotor deutlich kleiner ausgestaltet werden. Das spart Bauraum, Gewicht und Kosten. Bevorzugt ist das vorgespannte Zugmittelgetriebe ausschließlich einseitig in Bezug auf die Lenkwelle angeordnet. Dies spart weiteren Bauraum ein.

Vorteilhaft wird der erfindungsgemäße Feedback-Aktuator in einem Steer-by-Wire Lenksystem eingesetzt. Weiter bevorzugt ist ein Feedback-Aktuator bei klassischen Lenksystemen, wie einer elektromechanischen Servolenkung, gewünscht. Vorzugsweise wird das vom Feedback-Aktuator gebildete Drehmoment zur Simulation der Rückwirkungen der Straße als die Summe eines von dem vorgespannten Zugmittelgetriebe auf die Lenkwelle aufgebrachten Drehmoments und eines von dem Elektromotor auf die Lenkwelle aufgebrachten Drehmoments gebildet.

In einer bevorzugten Ausführungsform weist der federbeaufschlagte Seilzug eine mit der Lenkwelle drehfest verbundene Seiltrommel und eine zur Lenkwelle beabstandete, drehbar gelagerte Kurvenscheibe auf, wobei die Kurvenscheibe mit einer Rückstellfeder verbunden ist und in eine Nullstellung vorgespannt ist. Durch die Auswahl der Geometrie der Seiltrommel und der Kurvenscheibe kann die Handmomentkurve einfach vordefiniert werden. In einer Ausführungsform ist die Seiltrommel im Querschnitt herzförmig ausgeformt. Die Kurvenscheibe ist im Profil bevorzugt nierenförmig.

Bevorzugt weist der Seilzug ein Seil auf, das mit der Seiltrommel und der Kurvenscheibe verbunden ist. Bei der herzförmigen Variante der Seiltrommel ist das Seil im Einschnitt mit der Seiltrommel verbunden. Vorzugsweise ist die Rückstellfeder eine Spiralfeder. Die Kurvenscheibe weist vorteilhafterweise einen mit der Rückstellfeder verbundenen Mitnehmer auf. Damit das Seil gezielt geführt wird, ist bevorzugt auf der Kurvenscheibe eine Führungskontur vorgesehen.

In einer Nullstellung ist das Seil gespannt und von der Seiltrommel maximal abgerollt. Das hat den Vorteil, dass in beide Lenkrichtungen das von dem Seilzug auf die Lenkwelle eingeleitete Drehmoment gleich ist.

Ein bei der Drehung der Lenkwelle von dem federbeaufschlagten Seilzug erzeugtes degressiv ansteigendes Gegendrehmoment kann von dem auf die Lenkwelle wirkenden Elektromotor angepasst werden. Dabei ist es vorteilhaft, wenn die Anpassung fahrzeuggeschwindigkeitsabhängig erfolgt.

Bevorzugt erzeugt der Feedback-Aktuator ein Drehmoment zur Simulation der Rückwirkungen der Straße, dass durch die Summe eines von dem vorgespannten Zugmittelgetriebe an der Lenkwelle aufgebrachten Drehmoments und eines von dem Elektromotor auf der Lenkwelle aufgebrachten Drehmoments gebildet ist. Dabei ist es vorteilhaft, wenn bei einer Drehung der Lenkwelle ein von dem vorgespannten Zugmittelgetriebe erzeugtes degressiv ansteigendes Gegendrehmoment von dem auf die Lenkwelle wirkenden Elektromotor fahrzeug- und lenkgeschwindigkeitsabhängig anpassbar ist.

In einer vorteilhaften Ausführungsform weist das vorgespannte Zugmittelgetriebe einen Seilzug auf, wobei der federbeaufschlagte Seilzug eine mit der Lenkwelle drehfest verbundene Seiltrommel und eine zur Lenkwelle beabstandete, drehbar gelagerte Kurvenscheibe aufweist, wobei die Kurvenscheibe mit einer Rückstellfeder verbunden ist und in eine Nulllage vorgespannt ist. Der Seilzug weist ein Seil auf, das vorzugsweise mit der Seiltrommel und der Kurvenscheibe verbunden ist und auf der Kurvenscheibe in einer Führungskontur geführt auf- und abrollbar ist. In der Nulllage ist das Seil gespannt und bevorzugt maximal von der Seiltrommel abgerollt.

In einer vorteilhaften Ausgestaltung der Erfindung ist ein Steer-by-Wire-Lenksystem für einen Feedback-Aktuator vorgesehen, welcher über eine Lenkwelle die Rückwirkungen der Straße auf ein Lenkrad überträgt und als drehmomenterzeugendes Mittel ein vorgespanntes Zugmittelgetriebe und einen Elektromotor aufweist.

Nachfolgend wird ein Ausführungsbeispiel der Erfindung anhand der Zeichnungen näher beschrieben. Gleiche oder funktionsgleiche Bauteile sind in allen Zeichnungen mit den gleichen Bezugsziffern versehen. Es zeigen:
- Fig. 1:: eine schematische Darstellung einer Steer-by-Wire-Kraftfahrzeuglenkung,
- Fig. 2:: eine räumliche Darstellung eines Lenkrads mit Lenkwelle, Reibelement und Feedback-Aktuator,
- Fig. 3:: eine vergrößerte räumliche Ansicht eines Seilzugs des Feedback-Aktuators,
- Fig. 4:: eine weitere räumliche Darstellung des Seilzugs aus Fig. 3, sowie
- Fig. 5: eine Lenkmomentkurve des Seilzugs.

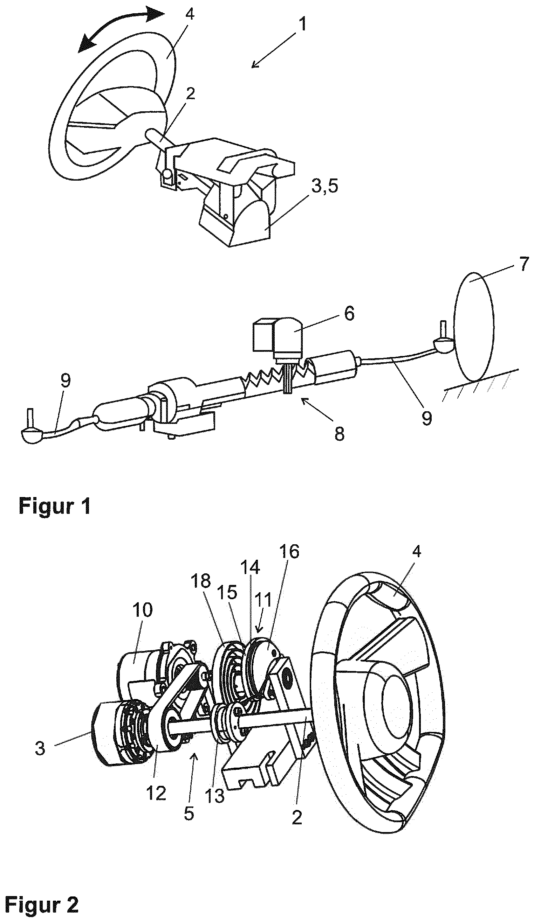

In der Figur 1 ist eine Steer-by-Wire-Lenkeinrichtung 1 gezeigt. An einer Lenkwelle 2 ist ein nicht dargestellter Drehwinkelsensor angebracht, welcher den durch Drehen des Lenkrads 4 aufgebrachten Drehwinkel erfasst. Des Weiteren ist an der Lenkwelle 2 ein Feedback-Aktuator 5 angebracht, welcher dazu dient, die Rückwirkungen von der Fahrbahn auf das Lenkrad 4 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an ein Steuergerät übertragen. Das Steuergerät steuert in Abhängigkeit des Signals vom Drehwinkelsensor sowie weiteren Eingangsgrößen, wie z. B. Fahrzeuggeschwindigkeit, Gierrate, Lenkgeschwindigkeit und dergleichen einen elektrischen Lenksteller 6 an, welcher die Stellung der gelenkten Räder 7 steuert. Der Lenksteller 6 wirkt über ein Lenkgetriebe 8 sowie eine Spurstange 9 und anderen Bauteilen mittelbar auf die gelenkten Räder 7.

Figur 2 zeigt einen erfindungsgemäßen Feedback-Aktuator 5 mit einem Elektromotor 10 und einem Seilzug 11. Das Lenkrad 4 ist drehfest mit der Lenkwelle 2 verbunden. Am Ende der Lenkwelle 2 ist ein einstellbares Reib-bzw. Dämpfungselement 3 angeordnet, das in Abhängigkeit der Fahrzeug-und Lenkwinkelgeschwindigkeit und der Lenkrichtung das aufgebrachte Handmoment überlagert, um dem Fahrer ein möglichst natürliches Lenkgefühl zu übertragen. Der Elektromotor 10 ist mit der Lenkwelle 2 über einen Riementrieb 12 verbunden. Der Seilzug 11 weist eine mit der Lenkwelle 2 drehfest verbundene Seiltrommel 13, ein Seil 14, ein auf einer Platte 15 angeordnete Kurvenscheibe 16 und einen Mitnehmer 17, der mit einem Ende einer Spiralfeder 18 verbunden ist, auf. Die Kurvenscheibe 16 dient als Seilführungselement, dazu weist sie auf ihrer äußeren Umfangsfläche zumindest teilweise eine Führungskontur für ein Seil 14 auf.

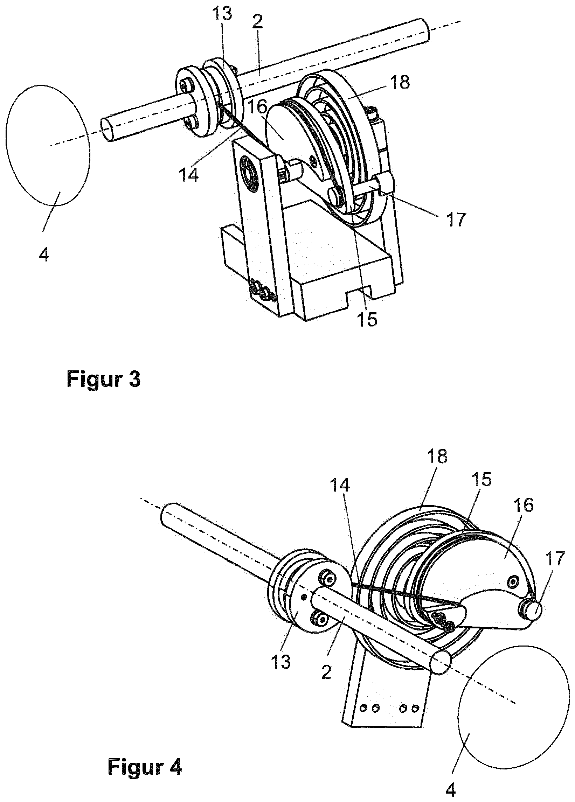

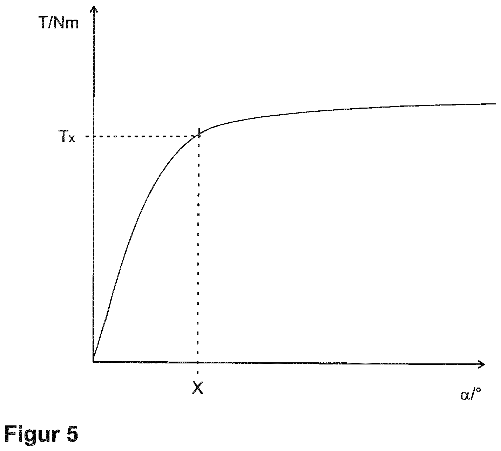

In den Figuren 3 und 4 ist im Detail der Seilzug 11 dargestellt. Figur 3 zeigt die Geradeausstellung der Lenkung, die sogenannte Nullstellung. Das Seil 14 ist an der Seiltrommel 13 sowie an dem Mitnehmer 17 befestigt. Die Drehachse der Seiltrommel 13 stimmt mit der Drehachse der Lenkwelle 2 überein. Die Platte 15 ist mit der Kurvenscheibe 16 drehfest verbunden und drehbar in einem vorbestimmten Abstand zur Lenkwelle 2 gelagert. Die Drehachse ist dabei parallel zur Drehachse der Lenkwelle 2 ausgerichtet. Der Mitnehmer 17 ist sowohl mit der Platte 15 als auch mit der Spiralfeder 18 fest verbunden. Das Seil 14 ist somit von der Lenkwelle 2 über die äußere Umfangsfläche der Kurvenscheibe 16 zum Mitnehmer 17 stets gespannt. Um dem Fahrer bis zu einem bestimmten Lenkwinkel (z. B. 120°) einen immer stärkeren Widerstand bzw. ein Lenkmoment zu übertragen, wird ein vom Fahrer eingeleiteter Drehwinkel über das Lenkrad 4 an die Lenkwelle 2 und anschließend über das Seil 14 an den Mitnehmer 17 weitergeleitet. In einer Nullstellung der Lenkung ist das Seil 14 gespannt und von der Seiltrommel 13 maximal abgerollt. Das Seil 14 wird bei einer Auslenkung von der Seiltrommel 13 auf der Lenkwelle 2 je nach Lenkrichtung im Uhrzeigersinn oder entgegen des Uhrzeigersinns aufgewickelt und von der Kurvenscheibe 16 abgewickelt. Dabei wird die Spiralfeder 18, die in den Mitnehmer 17 eingreift, gespannt und sie erzeugt eine degressiv ansteigende Gegenkraft, welche über das Seil 14 übertragen wird und ein Drehmoment erzeugt. Die Gegenkraft der Spiralfeder 18 steigt linear mit der Vergrößerung des Betrags des Lenkwinkels an und ergibt durch die variablen Angriffspunkte am Mitnehmer 17 und der Seiltrommel 13 eine degressive Handmomentkurve bzw. Lenkmomentkurve. Der degressive Kurvenverlauf von T über α ist in Figur 5 dargestellt. Die Kurve steigt zunächst bis zu einem Lenkradwinkel X steil bis zum Handmoment Tx an und erreicht anschließend annährend eine Sättigung. Das Drehmoment ergibt sich aus der Geometrie der Seiltrommel 13 und der Kurvenscheibe 16 und des sich dadurch ergebenden Hebelarms. Die erzeugte Gegenkraft ist dabei vom Betrag des Lenkwinkels abhängig und somit für beide Lenkrichtung gleich.

Durch den Elektromotor 10, der an die Lenkwelle 2 mittels des Riementriebs 12 gekoppelt ist, kann das erzeugte Drehmoment erhöht oder verringert werden.

Zusätzlich weist das System ein Reib-bzw. Dämpfungselement auf, das in Abhängigkeit der Fahrzeug- und Lenkwinkelgeschwindigkeit und Lenkrichtung das Handmoment überlagert. Dadurch soll ein möglichst natürliches Lenkgefühl erreicht werden.

Funktion des insoweit beschriebenen Feedback-Aktuators ist es eine Handmomentkurve für den Fahr- und Parkbetrieb eines Fahrzeuges zu erzeugen. Bei Drehbewegungen am Lenkrad wird das Seil des Seilzugs auf die mit dem Lenkrad verbundene Seiltrommel auf- und von der Seilführung der Kurvenscheibe abgewickelt. Dadurch wird die Spiralfeder gespannt und das Seil überträgt eine Kraft, welche durch die Geometrie der mit dem Lenkrad bzw. der Lenkwelle verbundenen Seiltrommel und der Kurvenscheibe die gewünschte degressive Handmomentkurve am Lenkrad darstellt. Die geschwindigkeitsabhängige Anpassung der Handmomentkurve erfolgt durch den Elektromotor, welcher in der Lenkachse mit entsprechender Übersetzung eingreift. Durch die mechanischen Komponenten kann der Elektromotor deutlich kleiner ausgelegt werden, was Kosten und Gewicht einspart. Die Grundreibung im System und die Handmomentkurve für den Parkbetrieb werden über ein einstellbares Reibelement im Lenkstrang dargestellt.

## Patentansprüche

1. Feedback-Aktuator (5) für eine Lenkeinrichtung (1) für mit einem auf die gelenkten Räder (7) wirkenden, in Abhängigkeit des Fahrerlenkwunsches elektronisch geregelten Lenksteller (6) versehene Kraftfahrzeuge, wobei der Feedback-Aktuator (5) über eine Lenkwelle (2) die Rückwirkungen der Straße auf ein Lenkrad (4) überträgt, wobei der Feedback-Aktuator (5) als drehmomenterzeugende Mittel ein vorgespanntes Zugmittelgetriebe (11) und einen Elektromotor (10) aufweist **dadurch gekennzeichnet, dass** das Zugmittelgetriebe einen federbeaufschlagten Seilzug (11) aufweist.

2. Feedback-Aktuator (5) nach Anspruch 1, **dadurch gekennzeichnet, dass** der Feedback-Aktuator (5) ein Drehmoment zur Simulation der Rückwirkungen der Straße erzeugt, das durch die Summe eines von dem vorgespannten Zugmittelgetriebe auf die Lenkwelle (2) aufgebrachten Drehmoments und eines von dem Elektromotor (10) auf die Lenkwelle (2) aufgebrachten Drehmoments gebildet ist.

3. Feedback-Aktuator (5) nach Anspruch 1 oder 2, **dadurch gekennzeichnet, dass** der federbeaufschlagte Seilzug (11) eine mit der Lenkwelle (2) drehfest verbundene Seiltrommel (13) und eine zur Lenkwelle (2) beabstandete, drehbargelagerte Kurvenscheibe (16) aufweist, wobei die Kurvenscheibe (16) mit einer Rückstellfeder (18) verbunden ist und in eine Nullstellung vorgespannt ist.

4. Feedback-Aktuator (5) nach Anspruch 3, **dadurch gekennzeichnet, dass** die Rückstellfeder (18) eine Spiralfeder ist.

5. Feedback-Aktuator (5) nach einem der vorhergehenden Ansprüche, **dadurch gekennzeichnet, dass** der federbeaufschlagte Seilzug (11) ein Seil (14) aufweist, das mit der Seiltrommel (13) und der Kurvenscheibe (16) verbunden ist.

6. Feedback-Aktuator (5) nach einem der vorhergehenden Ansprüche 3 bis 4, **dadurch gekennzeichnet, dass** die Kurvenscheibe (16) einen mit der Rückstellfeder (18) verbundenen Mitnehmer (17) aufweist.

7. Feedback-Aktuator (5) nach einem der vorhergehenden Ansprüche 3 oder 5, **dadurch gekennzeichnet, dass** das Seil (14) auf der Kurvenscheibe (16) in einer Führungskontur geführt auf- und abrollbar ist.

8. Feedback-Aktuator (5) nach einem der vorhergehenden Ansprüche 4 bis 6, **dadurch gekennzeichnet, dass** in einer Nullstellung das Seil (14) gespannt und von der Seiltrommel (13) maximal abgerollt ist.

9. Feedback-Aktuator (5) nach einem der vorhergehenden Ansprüche, **dadurch gekennzeichnet, dass** bei Drehung der Lenkwelle (2) ein von dem federbeaufschlagten Seilzug (11) erzeugtes degressiv ansteigendes Gegendrehmoment von dem auf die Lenkwelle (2) wirkenden Elektromotor (10) anpassbar ist.

10. Feedback-Aktuator (5) nach Anspruch 9, **dadurch gekennzeichnet, dass** die Anpassung fahrzeuggeschwindigkeitsabhängig ist.

11. Steer-by-Wire Lenkvorrichtung (1) für Kraftfahrzeuge mit einem auf die gelenkten Räder (7) wirkenden, in Abhängigkeit des Fahrerlenkwunsches elektronisch geregelten Lenksteller (6) und mit einem Feedback-Aktuator (5), welcher über eine Lenkwelle (2) die Rückwirkungen der Straße auf ein Lenkrad (4) überträgt, **dadurch gekennzeichnet, dass** der Feedback-Aktuator (5) nach einem der Ansprüche 1 bis 10 ausgebildet ist.

## Claims

1. Feedback actuator (5) for a steering mechanism (1) for motor vehicles provided with a steering adjuster (6) which acts on the steered wheels (7) and is controlled electronically in accordance with the driver's steering command, wherein the feedback actuator (5) transmits the feedback from the road to a steering wheel (4) via a steering shaft (2) **wherein** the feedback actuator (5) comprises a preloaded belt drive (11) and an electric motor (10) as a torque-generating means, **characterized in that** the belt drive comprises a spring-loaded cable pull (11).

2. Feedback actuator (5) according to Claim 1, **characterized in that** the feedback actuator (5) generates a torque to simulate the feedback of the road that is formed by the sum of a torque from the preloaded belt drive applied to the steering shaft (2) and a torque from the electric motor (10) applied to the steering shaft (2) .

3. Feedback actuator (5) according to Claim 1 or 2, **characterized in that** the spring-loaded cable pull (11) comprises a cable drum (13) connected to the steering shaft (2) in a torque-proof manner and a swivel-mounted cam disc (16) spaced away from the steering shaft (2), wherein the cam disc (16) is connected to a return spring (18) and preloaded into a zero position.

4. Feedback actuator (5) according to Claim 3, **characterized in that** the return spring (18) is a spiral spring.

5. Feedback actuator (5) according to one of the preceding claims, **characterized in that** the spring-loaded cable pull (11) comprises a cable (14), which is connected to the cable drum (13) and the cam disc (16).

6. Feedback actuator (5) according to one of the preceding Claims 3 to 4, **characterized in that** the cam disc (16) comprises a driver (17) connected to the return spring (18).

7. Feedback actuator (5) according to one of the preceding Claims 3 or 5, **characterized in that** the cable (14) can be rolled up and rolled out on the cam disc (16) guided within a guide contour.

8. Feedback actuator (5) according to one of the preceding Claims 4 to 6, **characterized in that** the cable (14) is taut in a zero position and rolled out from the cable drum (13) to a maximum level.

9. Feedback actuator (5) according to one of the preceding claims, **characterized in that,** when rotating the steering shaft (2), a degressively increasing counter-torque generated by the spring-loaded cable pull (11) can be adjusted by the electric motor (10) acting on the steering shaft (2).

10. Feedback actuator (5) according to Claim 9, **characterized in that** the adjustment depends on the speed of the vehicle.

11. Steer-by-wire steering mechanism (1) for motor vehicles with a steering adjuster (6), which acts on the steered wheels (7) and is controlled electronically in accordance with the driver's steering command and with a feedback actuator (5), which transmits the feedback from the road to a steering wheel (4) via a steering shaft (2), **characterized in that** the feedback actuator (5) is designed according to one of Claims 1 to 10.

## Revendications

1. Actionneur à rétroaction (5) destiné à un dispositif de direction (1) pour véhicules automobiles qui comprend un moyen de commande de direction (6) agissant sur les roues directrices (7) et régulé électroniquement en fonction de la demande de direction du conducteur, l'actionneur à rétroaction (5) transmettant les effets de la route à un volant (4) par le biais d'un arbre de direction (2), l'actionneur à rétroaction (5) comportant comme moyen de génération de couple un mécanisme de traction précontraint (11) et un moteur électrique (10), **caractérisé en ce que** le mécanisme de traction comporte un câble à ressort (11).

2. Actionneur à rétroaction (5) selon la revendication 1, **caractérisé en ce que** l'actionneur à rétroaction (5) génère un couple pour simuler les effets de la route, lequel couple est formé par la somme d'un couple appliqué sur l'arbre de direction (2) par le mécanisme de traction précontraint et d'un couple appliqué sur l'arbre de direction (2) par le moteur électrique (10).

3. Actionneur à rétroaction (5) selon la revendication 1 ou 2, **caractérisé en ce que** le câble à ressort (11) comporte un tambour de câble (13) relié solidairement en rotation à l'arbre de direction (2) et une came (16) montée à rotation à distance de l'arbre de direction (2), la came (16) étant reliée à un ressort de rappel (18) et précontrainte dans une position zéro.

4. Actionneur à rétroaction (5) selon la revendication 3, **caractérisé en ce que** le ressort de rappel (18) est un ressort en spirale.

5. Actionneur à rétroaction (5) selon l'une des revendications précédentes, **caractérisé en ce que** le câble à ressort (11) comprend un câble (14) qui est relié au tambour de câble (13) et à la came (16).

6. Actionneur à rétroaction (5) selon l'une des revendications précédentes 3 et 4, **caractérisé en ce que** la came (16) comporte un entraîneur (17) relié au ressort de rappel (18).

7. Actionneur à rétroaction (5) selon l'une des revendications précédentes 3 ou 5, **caractérisé en ce que** le câble (14) est enroulé et déroulé en étant guidé sur la came (16) selon un contour de guidage.

8. Actionneur à rétroaction (5) selon l'une des revendications précédentes 4 à 6, **caractérisé en ce que** le câble (14) est tendu dans une position zéro et déroulé au maximum du tambour de câble (13).

9. Actionneur à rétroaction (5) selon l'une des revendications précédentes, **caractérisé en ce que**, pendant la rotation de l'arbre de direction (2), un couple antagoniste croissant de façon dégressive et généré par le câble à ressort (11) peut être adapté par le moteur électrique (10) agissant sur l'arbre de direction (2) .

10. Actionneur à rétroaction (5) selon la revendication 9, **caractérisé en ce que** l'adaptation dépend de la vitesse du véhicule.

11. Dispositif de direction à commande électrique (1) pour véhicules automobiles qui comprend un moyen de commande de direction (6), agissant sur les roues directrices (7) et régulé électroniquement en fonction de la demande de direction du conducteur, et un actionneur à rétroaction (5) qui transmet les effets de la route à un volant (4) par le biais d'un arbre de direction (2), **caractérisé en ce que** l'actionneur à rétroaction (5) est conçu selon l'une des revendications 1 à 10.
